# FASCICULE DE BREVET EUROPEEN

(11) **EP 1 355 784 B1**
(45) Date de publication et mention de la délivrance du brevet: **01.03.2006**
(21) Numéro de dépôt: 01993540.2
(22) Date de dépôt: 09.11.2001
(51) Int. Cl.: B32B 27/12, B42D 15/00

(54) **SUPPORT DE SECURITE COMPLEXE IMPRIMABLE ET SON PROCEDE DE FABRICATION**
KOMPLEXER BEDRUCKBARER SICHERHEITSHALTER UND VERFAHREN ZUR HERSTELLUNG
PRINTABLE COMPLEX SECURITY SUPPORT AND METHOD FOR MAKING SAME

(30) Priorité: 13.11.2000 FR 0014527
(43) Date de publication de la demande: 29.10.2003
(73) Titulaire: Arjo Wiggins Security SAS, 92130 Issy les Moulineaux (FR)
(72) Inventeur: VALLEE, Antoine, F-38500 Voiron (FR)
(74) Mandataire: Carré, Claudine Bernadette
(86) Numéro de dépôt international: PCT/FR2001/003508
(87) Numéro de publication internationale: WO 2002/038368

(56) Documents cités:
- DE-U- 8 907 314
- US-A- 3 853 675
- US-A- 5 413 870
- PATENT ABSTRACTS OF JAPAN vol. 1999, no. 11, 30 septembre 1999 (1999-09-30) & JP 11 170467 A (MIKI TOKUSHU SEISHI KK), 29 juin 1999 (1999-06-29)
- PATENT ABSTRACTS OF JAPAN vol. 1999, no. 08, 30 juin 1999 (1999-06-30) & JP 11 078277 A (TORAY IND INC), 23 mars 1999 (1999-03-23)

## Description

La présente invention concerne un support de sécurité complexe imprimable ainsi que son procédé de fabrication et son utilisation et un document de sécurité le comportant.

Dans la demande de brevet australien AU 488652, on décrit un support de sécurité pour fabriquer des billets de banque comprenant un substrat en thermoplastique opaque lié à un tissu ou un non-tissé, en particulier une grille en polyamide pour favoriser la stabilité dimensionnelle. Le substrat est imprimé et comporte des éléments de sécurité optiquement variables.

Dans la demande de brevet internationale WO 8300659, on décrit aussi un substrat thermoplastique fait d'un film transparent bi-orienté, couché sur chacune de ses faces avec des compositions opaques et appliquées de manière à laisser une aire transparente, dite «fenêtre transparente », permettant d'observer les éléments de sécurité incorporés dans le film polymère.

Dans la demande de brevet internationale WO 9600146, on décrit un film de polyoléfines pour fabriquer des billets de banque constitués de deux couches de polymères orientés l'un par rapport à l'autre de façon normale.

Dans la pratique, on utilise actuellement des supports de polyoléfines pour faire des supports de billets de banque. Cependant ces supports présentent plusieurs inconvénients. Ils sont notamment peu résistants à la chaleur et sont très sensibles à une élévation de température ; ils deviennent mous et déformables à l'approche d'une source de chaleur (soleil, radiateur, etc...). Plus particulièrement cela peut poser des problèmes lors de l'impression taille-douce spécifique aux documents de sécurité tels que les billets de banque car cette impression se fait à chaud vers 80 °C pour fluidifier l'encre.

On a relevé aussi qu'en impression taille douce, le rendu d'impression est assez médiocre par rapport à celui d'un papier car la reprise d'encre est nettement inférieure à celle d'un papier.

Les films polyoléfines sont assez peu rigides et présentent un autre désavantage qui est une faible résistance au déchirement amorcé.

Par ailleurs, les billets de banque en plastique actuels ont une durée de vie élevée par rapport au billet de banque en papier pour ce qui concerne la résistance à la salissure mais cet avantage est limité du fait que les autres caractéristiques de durabilité telles que la tenue de l'impression, la tenue des éléments de sécurité qu'ils comportent (tels que dispositifs optiquement variables, réseaux de diffraction, etc.), ou la résistance au déchirement amorcé, ne sont pas améliorées.

L'invention a pour but de remédier à tous ces inconvénients.

L'un des buts de l'invention est de fournir un support plastique permettant d'obtenir un billet de banque ayant une épaisseur comparable à celle des papiers pour billets de banque (d'environ 90 à 120 µm), et une rigidité s'approchant de celle des papiers pour billets de banque.

Un autre but est également de fournir un support plastique de sécurité ayant une résistance au déchirement amorcé au moins égale à celle d'un papier pour billet de banque, des caractéristiques d'imprimabilité favorables notamment pour l'impression par taille douce, et une excellente durabilité de l'impression au cours de la circulation du billet.

Un autre but de l'invention est aussi de fournir un support plastique de sécurité ayant une résistance à la température améliorée.

Les buts de l'invention sont atteints en fournissant un support de sécurité complexe imprimable qui se caractérise par le fait qu'il comporte un film de polyester (1), présentant une face interne (1a) et une face externe (1b), et un autre film de polyester (3), présentant une face interne (3a) et une face externe (3b), entre lesquels est inséré un non-tissé (2), présentant une face (2a) et une face (2b), ce non-tissé composé de fibres et/ou filaments étant résistant mécaniquement, en particulier au déchirement et à la chaleur.

De préférence, le non-tissé (2) a un volume spécifique compris entre 1,5 et 2,5 cm³/g.

De préférence, le non-tissé (2) est un produit thermolié obtenu par calandrage à chaud d'un ou plusieurs voiles formés de fibres et/ou filaments de polyester.

De préférence les fibres ont un diamètre moyen compris entre 5 et 20 µm et les filaments entre 10 et 50 µm.

En particulier, le non-tissé (2) a une épaisseur comprise entre 40 et 70 µm.

De préférence le non-tissé (2) est translucide ou transparent.

Selon un cas particulier, le non-tissé (2) comporte au moins un élément de sécurité.

Plus particulièrement ledit élément de sécurité est choisi parmi les impressions, les fibres de sécurité telles que des fibres métalliques, des fibres magnétiques, des fibres changeant d'aspect selon l'angle d'observation ou sous l'action d'une source d'excitation tel qu'un rayonnement notamment des fibres fluorescentes, thermochromes, photochromes.

De préférence aussi, au moins l'un des films de polyester (1);(3) comporte au moins un élément de sécurité et de préférence dans sa structure et/ou sur sa face interne (1a) ; (3a).

Avantageusement le film (1);(3) est un film présentant comme élément de sécurité une ou plusieurs zones sous forme de bande comportant des indices sous forme de caractères notamment alphanumériques et/ou des dessins et apparaissant en positif et pouvant être métallisés et/ou magnétiques et/ou opaques et colorés et/ou fluorescents et/ou photochromes et/ou thermochromes ou encore sensibles à d'autres rayonnements comme les infra-rouges. Ces indices peuvent aussi apparaître en négatif entourés d'une couche métallisée et/ou magnétique et/ou opaque blanche ou colorée et/ou thermochrome et/ou fluorescente et/ou photochrome ou encore sensible à d'autres rayonnements comme les infra-rouges, les indices étant eux-mêmes colorés et/ou photochromes et/ou fluorescents et/ou thermochromes ou encore sensibles à d'autres rayonnements comme les infra-rouges.

Ces films peuvent aussi comporter comme élément de sécurité des antennes de détection, des puces électroniques éventuellemnt détectables à distance dont le circuit intégré est une base silicium ou une base polymère comme décrite dans la demande de brevet WO9954842.

Ces films peuvent aussi comporter comme élément de sécurité des pistes magnétiques, des hologrammes. Ces films peuvent comporter des pigments magnétiques répartis dans toute leur masse ou dans une couche à leur surface.

Avantageusement les films (1) et (3) peuvent être les films de polyester habituellement conçus pour faire des fils de sécurité ,tels que ceux décrits par exemple dans les demandes de brevet EP279880, EP319157, EP330033, EP608078.

Selon un cas particulier ledit élément du non-tissé (2) et/ou du film (1);(3) est une impression de dégradés de gris. Une telle impression observée sur le fond fibreux du non-tissé (2), donne une très bonne simulation de filigrane couramment présent dans les papiers de sécurité et billet de banque.

De préférence le non-tissé (2) est imprégné d'un composé lui conférant la capacité d'empêcher que les liquides comme l'eau ou des solvants se propagent en son sein afin d'avoir une bonne résistance à la délamination du complexe film(1)/non-tissé(2)/film(3) obtenu, notamment en cas de tentative de falsification. En particulier un tel composé peut-être un polymère notamment un copolymère styrène-acrylate utilisé sous forme de dispersion aqueuse stabilisée.

De préférence les films (1);(3) sont translucides ou transparents.

De préférence la face externe (1b) ; (3b) des films (1) et (3) comporte une couche opaque (4);(5) imprimable, favorisant la qualité et l'accrochage de l'impression qu'elle recevra. Ces couches (4);(5) améliorent notamment l'imprimabilité des films, en particulier vis-à-vis des encres utilisées pour les billets de banque, et la haute durabilité de l'impression sans nécessiter de rajouter un vernis de protection.

Plus particulièrement ledit support comporte au moins une fenêtre (8) constituée par des zones non recouvertes de couche opaque (4);(5), toutes ces zones étant de préférence en correspondance de manière à former une fenêtre traversante. En effet la fenêtre (8) peut être présente sur une seule face du support, unique ou multiple, et dans ce dernier cas toutes d'une même dimension ou de dimensions variables. Une ou des fenêtres peuvent être présentes sur chaque face du support ou encore il peut y avoir au moins une fenêtre traversante c'est-à-dire quand toutes les zones exemptes de couches opaques sont en correspondance.

Selon un cas particulier, la face externe (1b);(3b) des films (1) et (3) comporte en dessous de la couche opaque (4);(5), une couche d'encre opaque (6);(7) favorisant l'accrochage des couches (4);(5) sur les films (1);(3), et laissant apparaître le cas échéant lesdites zones non recouvertes de couche opaque (4);(5) pour former ladite fenêtre (8). Les couches (6);(7) sont réalisées en milieu solvant et favorisent l'adhésion des couches opaques réalisées en milieu aqueux sur les films plastiques et par conséquent l'imprimablité du support et la durabilité du support imprimé obtenu. Elles apportent également un supplément d'opacification du complexe.

Selon un cas particulier et avantageusement, au moins un élément de sécurité du film (1);(3) et/ou du non-tissé est observable dans ladite fenêtre (8).

Selon un autre cas particulier, les films de polyester (1) et (3) sont des films ayant une épaisseur comprise entre 15 et 25 µm.

De préférence, la couche (4);(5) et le cas échéant la couche (6);(7) a une épaisseur d'environ 5 µm.

De préférence, le support selon l'invention a une épaisseur moyenne comprise entre 100 et 115 µm.

Selon un cas particulier, les films (1) et (3) comportent un traitement de surface sur leur face externe respective (1b) ; (3b), ce traitement permettant d'améliorer l'accrochage de la couche opaque. Un tel traitement peut être un vernis appelé "primer", déposé par tout moyen de couchage ou d'enduction, ou une couche apportée par coextrusion.

De préférence, les couches (4) et (5) sont des couches comportant un liant soluble ou sous forme dispersable en milieu aqueux, et des charges de couchage. De préférence, ces charges de couchage sont blanches, de telles charges ont été décrites par exemple dans le brevet européen EP 514455.

Selon un cas particulier, les couches (6) et (7) sont constituées d'un liant et d'une charge opaque. De préférence ces couches ont une couleur blanche.

Selon un cas particulier, au moins l'une des couches (4);(5) et le cas échéant (6);(7), comporte au moins un élément de sécurité. Un tel élément peut être notamment des pigments de sécurité ou antifalsification, des planchettes et/ou des fibres de sécurité notamment colorées ou changeant d'aspect selon l'angle d'observation (notamment iridescentes) ou sous l'action d'une source d'excitation tel qu'un rayonnement notamment selon un effet thermochrome, photochrome ou de fluorescence.

De manière générale le support complexe selon l'invention peut comporter divers éléments de sécurité connus et judicieusement placés et combinés dans les différents composants du support ou entre ces composants.

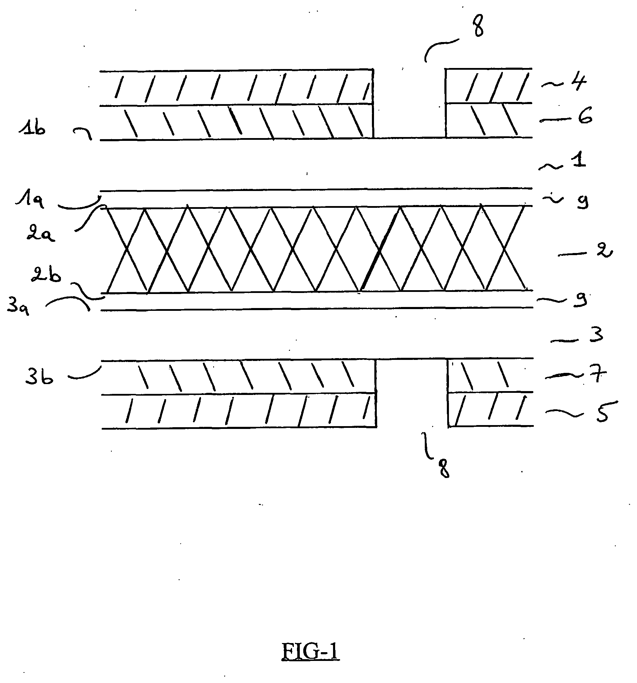

La figure 1 montre une configuration possible du support selon l'invention, les films (1) et (3) et le non-tissé (2) ayant été assemblés par contrecollage selon les couches de colle (9), la fenêtre (8) étant traversante; les proportions relatives des différents composants du support ne sont pas respectées pour une meilleure clarté de la figure.

L'invention concerne aussi un procédé de fabrication du support complexe de sécurité.

De façon générale et préférée, le procédé de fabrication d'un support complexe de sécurité tel que décrit précédemment se caractérisé en ce que :
- on assemble le film (1), le non-tissé (2) et le film (3) par contrecollage,
- on réalise en milieu aqueux les couches opaques (4);(5), et on les dépose respectivement sur les faces externes (1b) et (3b) relatives aux films (1) et (3), en réalisant le cas échéant une «réserve » pour faire des zones exemples de couche opaque pour former ladite fenêtre (8), et le cas échéant après avoir déposé de même et fait sécher les couches (6);(7) réalisées en milieu solvant.

Selon un cas particulier, ce procédé comporte les étapes suivantes :
- on imprime au moins un élément de sécurité sur au moins l'une des faces (2a);(2b) du non-tissé (2),
- on contrecolle simultanément la face interne (1a) du film de polyester (1) avec la face (2a) d'une feuille de non-tissé (2) et la face interne (3a) dudit film (3) avec l'autre face (2b) du non-tissé (2),
- on dépose par un procédé d'impression les couches opaques (4);(5) réalisées en milieu aqueux respectivement sur les faces (1b) et (3b) relatives aux films (1) et (3) en réalisant le cas échéant une « réserve » pour faire des zones exemptes de couche, repérées entre elles et par rapport à l'élément de sécurité, afin de former ladite fenêtre (8), le cas échéant après avoir déposé de même et fait sécher les couches (6);(7) réalisées en milieu solvant.

Selon un autre cas particulier, ce procédé comporte les étapes suivantes :
- on contrecolle la face interne (1a) du film de polyester (1) avec une face (2a) d'une feuille de non-tissé (2),
- on imprime au moins un élément de sécurité sur la face interne (3a) de l'autre film de polyester (3),
- on contrecolle la face imprimée (3a) dudit film (3) avec l'autre face (2b) du non-tissé (2) de l'assemblage du film (1) et du non-tissé (2)
- on dépose par un procédé d'impression les couches opaques (4);(5) réalisées en milieu aqueux respectivement sur les faces (1b) et (3b) relatives aux films (1) et (3) en réalisant le cas échéant une « réserve » pour faire des zones exemptes de couches opaques, repérées entre elles et par rapport à l'élément de sécurité, afin de former la fenêtre (8), le cas échéant après avoir déposé de même et fait sécher les couches (6);(7) réalisées en milieu solvant.

De préférence, les couches (4);(5) et le cas échéant les couches (6);(7), sont déposées par héliogravure.

De préférence la colle de contrecollage est composée de polyuréthane et en particulier est utilisée en milieu solvant.

L'assemblage des films et du non-tissé est réalisé de préférence par contrecollage mais d'autres moyens connus tel que le soudage pourraient être utilisés.

L'invention concerne aussi un document de sécurité obtenu à partir de ce support complexe plastique de sécurité. En particulier ce dit document est un billet de banque.

L'invention concerne aussi l'utilisation du support complexe plastique de sécurité pour fabriquer un billet de banque.

L'invention sera mieux comprise à l'aide des exemples non limitatifs suivants :

### Exemple 1 selon l'invention :

Un film (1) de polyester coextrudé et transparent, ayant une épaisseur de 18 µm est imprimé en héliogravure d'un élément de sécurité, repéré de telle sorte qu'il y ait un élément par billet de banque, à un emplacement spécifique.

Ce film est enduit d'une colle polyuréthane puis contrecollé avec un non-tissé (2) en polyester thermolié de volume spécifique 1,52 cm³/g, commercialisé sous le nom TS35HT par la société NORDLYS.

Plus particulièrement ce non-tissé est réalisé en assemblant par calandrage à chaud quatre voiles de fibres de polyester comprenant deux types de polyester, l'un étant étiré et donc cristallin , et l'autre étant non étiré et donc amorphe, de façon à assurer cohésion et caractéristiques mécaniques. Les fibres le constituant ont une longueur comprise entre 38 et 60 mm et font 1,5 deniers, soit 13 µm de diamètre. En fin de calandrage à chaud, ce non-tissé est 100 % cristallisé, ce qui lui assure une très bonne stabilité à la température.

Après réticulation de la colle de polyuréthane, le complexe obtenu est lui-même contrecollé avec un film de polyester (3) de même type que le film (1), de façon à former le sandwich film/non-tissé/film.

Ce sandwich est ensuite imprimé en héliogravure en quatre passages en ligne, de sorte que :
- chaque face reçoive successivement une impression d'encre blanche (6);(7) réalisée en milieu solvant (encre commercialisée par la société Georget) et une couche (4);(5) réalisée en milieu aqueux (pigments d'oxyde de titane, de carbonate de calcium et de silice liés par un polyuréthane à raison de 36% en poids sec par rapport aux pigments), en quantités suffisantes pour éliminer tout risque de transvision gênante ;
- chaque billet comporte une fenêtre (8) non opacifiée laissant apparaître l'élément de sécurité sur le fond fibreux du non-tissé (2), réalisée par le double repérage des zones non couchées Recto/Verso et des éléments de sécurité par rapport à ces zones.

Le produit obtenu est testé selon les tests décrits plus loin. Les résultats sont présentés dans le tableau 2.

Le produit obtenu présente :
- une résistance à la salissure extrêmement élevée, comparable à celles des bases plastiques actuellement proposées sous le nom commercial DURANOTE pour les billets de banque en plastique et qui sont en polyoléfines,
- des caractéristiques de structure (grammage, épaisseur, rigidité) proches de celles d'un papier de base pour billet de banque,
- une résistance au déchirement amorcé supérieure à celle d'un papier pour billet de banque, et très supérieure à celle des bases plastiques polyoléfines existantes,
- une très bonne stabilité à la température,
- une qualité d'impression en ce qui concerne la résolution (finesse des traits) égale à celle des meilleures bases actuelles en papier ou plastique, et en ce qui concerne le rendu (intensité des couleurs) égale à celle du papier et supérieure à celle des bases plastiques existantes.

### Exemple 2 selon l'invention:

On procède de la même façon qu'à l'exemple 1 mais on utilise un non-tissé (2) en polyester qui est un complexe d'un voile de fibres thermoliées et d'un voile (dit spun-bonded) à base de filaments de polyester thermoliés, de 4 deniers (soit 30 µm de diamètre). Il est commercialisé sous le nom X7509 par la société NORDLYS. Les caractéristiques de (2) sont présentées dans le tableau 1.

Le produit obtenu est testé selon les tests décrits plus loin. Les résultats sont présentés dans le tableau 2.

Le produit obtenu présente notamment, du fait que (2) a un aspect fibreux plus marqué que dans l'exemple 1, un élément de sécurité dont l'aspect est encore plus proche d'un filigrane d'un papier.

### TESTS:

Les échantillons ont été testés selon les tests décrits ci-après.
- Le grammage a été déterminé selon la norme internationale ISO 536.
- L'épaisseur a été déterminée selon la norme internationale ISO 20534.
- La résistance au déchirement amorcé Elmendorff a été déterminée selon la norme française d'origine européenne NF-EN 21974.
- La compressibilité Zwick a été déterminée selon la norme ASTM D1147 56T.
- la rigidité Kodak a été déterminée selon la norme française NFQ03-025.

### - Résistance à la salissure:

Le test de résistance à la salissure humide des feuilles imprimées est effectué de la manière suivante :
On découpe chaque feuille des exemples en plusieurs éprouvettes.
On fait subir un froissement à chaque éprouvette dans un appareil à froissement IGT. Puis on le défroisse manuellement, on la met dans un flacon qui ferme hermétiquement en présence de billes en céramique de 20 mm de diamètre et d'une poudre contenant des colorants jaune, brun, du noir de carbone, de la vermicullite, une composition de sueur artificielle et une composition de suintine.
Le flacon est placé dans un appareil TURBULA qui est mis en rotation sur une durée totale de 15 minutes. Afin de simuler le veillissement des échantillons, pour un papier donné, on réalise une cinétique de salissure en déterminant la blancheur selon la norme ISO 2471 (réflectance à 457 nm) et le degré de jaune avant salissure puis au bout d'un temps donné. On prend une éprouvette de papier sur laquelle on fait ces déterminations au bout de 5 minutes de salissure, sur une autre éprouvette du même papier, on fait ces déterminations au bout de 10 minutes de salissure, on refait les mêmes déterminations sur une autre éprouvette au bout de 15 minutes.
Le degré de jaune a été déterminé sur un spectrocolorimètre ELREPHO 2000 dans le système CIE sous illuminant D65 (lumière du jour et sans UV) et sous un angle d'observation de 10 degrés.
Pour apprécier le résultat, on compare les différences de blancheur ou de degré de jaune avant et après salissure à un temps donné. Plus la différence est faible, meilleure est la résistance. On calcule aussi la moyenne des différences à la fois de la blancheur et du degré de jaune pour avoir une évaluation de la résistance moyenne à la salissure. Dans le tableau 2 on a donné une appréciation globale.

### - Tenue à la température :

On expose les échantillons à des températures variant de 80 à 120°C en les plaçant dans des étuves pendant 3 minutes. On les laisse refroidir à température ambiante, puis on observe leurs déformations. Dans le tableau 2 on a donné une appréciation globale.

### - Imprimabilité taille douce :

On imprime les échantillons par impression en taille douce en laboratoire, puis on examine visuellement (avec ou sans grossissement optique) la finesse des traits (résolution) et l'intensité des couleurs (rendu). Dans le tableau 2 on a donné une appréciation globale.

### - Durabilité (ou résistance à la circulation) après impression taille-douce :

elle est appréciée visuellement selon le résultat global des trois tests suivants :
- résistance aux froissements en milieu humide,
- résistance aux frottements en milieu humide (eau),
- résistance à la lessivabilité.

En ce qui concerne les résistances aux froissements et aux frottements, les tests sont décrits dans l'article: WARING QUALITY OF EXPERIMENTAL CURRENCY-TYPE PAPERS, Journal of Research of the National Bureau of Standards, Volume 36, pages 249 à 268, mars 1946.

On teste la résistance à la lessivabilité des échantillons imprimés par taille-douce selon un test simulant un passage en machine à laver. Ce test de résistance à la lessivabilité des feuilles imprimées est effectué de la manière suivante :

On met une éprouvette du support imprimé dans un flacon contenant de l'eau et de la lessive. Le flacon est placé ensuite sur un appareil TURBULA et mis en rotation pendant 1 heure. On évalue la dégradation visuellement. Dans le tableau 2 on a donné une appréciation globale.

**TABLEAU 1**

| | TS35HT | X7509 |
|---|---|---|
| Grammage (g/m²) | 35,5 | 27,7 |
| Epaisseur (µm) | 53,9 | 57 |
| Volume spécifique (g/cm³) | 1,52 | 2,06 |
| Déchirement amorcé Elmendorf Sens Marche (mN.m²/g) | 20 | 91 |
| Compressibilité Zwick (%) | 59,1 | 54,7 |

**TABLEAU 2**

| | Support en polyoléfines Duranote | Papier | Exemple 1 | Exemple 2 |
|---|---|---|---|---|
| Grammage (g/m²) | 114 | 81 | 108 | 102 |
| Epaisseur (µm) | 121 | 99 | 101 | 107 |
| Rigidité Kodak SM/ST (mN/m) | 0,27/0,36 | 0,47/0,16 | 0,26/0,23 | 0,20/0,18 |
| Déchirement amorcé Elmendorf Moyenne SM/ST (indice en %) | 0,69 | 1,01 | 1,29 | 1,44 |
| Compressibilité Zwick (%) | 20 | 29,9 | 28,1 | 31,3 |
| Résistance à la salissure | +++ | + | +++ | +++ |
| Tenue à la température | - | ++ | ++ | ++ |
| Imprimabilité taille-douce | | | | |
| - résolution | +++ | + | +++ | +++ |
| - rendu | ++ | +++ | +++ | +++ |
| Durabilité | + | + | ++ | ++ |

| | | | | |
|---|---|---|---|---|
| SM = sens marche de la machine de production; ST : sens travers de la machine | | | | |

## Revendications

1. Support de sécurité complexe imprimable **caractérisé par le fait qu'**il comporte un film de polyester (1), présentant une face interne (1a) et une face externe (1b), et un autre film de polyester (3), présentant une face interne (3a) et une face externe (3b), entre lesquels est inséré un non-tissé (2), présentant une face (2a) et une face (2b), ce non-tissé composé de fibres et/ou filaments étant résistant mécaniquement, en particulier au déchirement et à la chaleur.

2. Support selon la revendication 1, **caractérisé par le fait que** le non-tissé (2) a un volume spécifique compris entre 1,5 et 2,5 cm³/g.

3. Support selon l'une des revendications 1 à 2, **caractérisé par le fait que** le non-tissé (2) est un produit thermolié obtenu par calandrage à chaud d'un ou plusieurs voiles formés de fibres et/ou filaments de polyester.

4. Support selon l'une des revendications précédentes, **caractérisé par le fait que** les fibres ont un diamètre moyen compris entre 5 et 20 µm et les filaments entre 10 et 50 µm.

5. Support selon l'une des revendications précédentes, **caractérisé par le fait que** ledit non-tissé a une épaisseur comprise entre 40 et 70 µm.

6. Support selon l'une des revendications précédentes, **caractérisé par le fait que** ledit non-tissé est imprégné d'un composé lui conférant la capacité d'empêcher que les liquides comme l'eau ou des solvants se propagent en son sein.

7. Support selon la revendication immédiatement précédente, **caractérisé par le fait que** ledit composé est un polymère notamment un copolymère styrène-acrylate.

8. Support selon l'une des revendications précédentes, **caractérisé par le fait que** les films (1);(3) sont translucides ou transparents.

9. Support selon l'une des revendications précédentes, **caractérisé par le fait que** le non-tissé (2) est translucide ou transparent.

10. Support selon l'une des revendications précédentes, **caractérisé par le fait que** le non-tissé (2) comporte au moins un élément de sécurité.

11. Support selon la revendication immédiatement précédente, **caractérisé par le fait que** ledit élément de sécurité est choisi parmi les impressions, les fibres de sécurité telles que des fibres métalliques, des fibres magnétiques, des fibres changeant d'aspect selon l'angle d'observation ou sous l'action d'une source d'excitation tel qu'un rayonnement, notamment des fibres fluorescentes, thermochromes, photochromes.

12. Support selon l'une des revendications précédentes, **caractérisé par le fait qu'**au moins l'un des films de polyester (1);(3) comporte au moins un élément de sécurité et de préférence dans sa structure et/ou sur sa face interne respective (1a);(3a).

13. Support selon l'une des revendications 10 à 12, **caractérisé par le fait que** ledit élément de sécurité du non-tissé (2) et/ou du film (1);(3) est une impression de dégradés de gris.

14. Support selon l'une des revendications précédentes, **caractérisé par le fait que** la face externe (1b);(3b) des films (1) et (3) comporte une couche opaque (4);(5) imprimable, favorisant la qualité et l'accrochage de l'impression qu'elle recevra.

15. Support selon la revendication immédiatemment précédente, **caractérisé par le fait qu'**il comporte au moins une fenêtre (8) constituée par des zones non recouvertes de couche opaque (4);(5), toutes ces zones étant de préférence en correspondance de manière à former une fenêtre traversante.

16. Support selon l'une des revendications 14 à 15, **caractérisé par le fait que** la face externe (1b);(3b) des films (1) et (3) comporte, en dessous de la couche opaque (4);(5), une couche d'encre opaque (6);(7) favorisant l'accrochage des couches (4);(5) sur les films (1);(3), et laissant apparaître le cas échéant lesdites zones non recouvertes de couche opaque en correspondance pour former ladite fenêtre (8).

17. Support selon l'une des revendications précédentes, **caractérisé par le fait que** chacun des films de polyester (1) et (3) a une épaisseur comprise entre 15 et 25 µm.

18. Support selon l'une des revendications 14 à 17, **caractérisé par le fait que** la couche (4);(5), et le cas échéant la couche (6);(7), a une épaisseur d'environ 5 µm.

19. Support selon l'une des revendications 15 à 18, **caractérisé par le fait qu'**au moins un élément de sécurité du film de polyester (1);(3) et/ou du non-tissé (2) est observable dans ladite fenêtre (8).

20. Support selon l'une des revendications 14 à 19, **caractérisé par le fait que** la couche (4);(5) et le cas échéant la couche (6);(7), comporte au moins un élément de sécurité.

21. Support selon l'une des revendications précédentes, **caractérisé par le fait qu'**il a une épaisseur moyenne comprise entre 100 et 115 µm.

22. Support selon l'une des revendications précédentes, **caractérisé par le fait qu'**il comporte une couche de colle (9) entre respectivement le film (1) et le non-tissé (2) et entre le non-tissé (2) et le film (3).

23. Procédé de fabrication d'un support complexe de sécurité tel que décrit par l'une des revendications 14 à 22, **caractérisé en ce que** :
- on assemble le film (1), le non-tissé (2) et le film (3) par contrecollage,
- on réalise en milieu aqueux les couches opaques (4);(5), et on les dépose respectivement sur les faces externes (1b) et (3b) relatives aux films (1) et (3), en réalisant le cas échéant une «réserve » pour faire des zones exemptes de couche opaque pour former ladite fenêtre (8), et le cas échéant après avoir déposé de même et fait sécher les couches (6);(7) réalisées en milieu solvant.

24. Procédé de fabrication selon la revendication 23, **caractérisé en ce qu'**il comporte les étapes suivantes :
- on imprime au moins un élément de sécurité sur au moins l'une des faces (2a);(2b) du non-tissé (2),
- on contrecolle simultanément la face interne (1a) du film de polyester (1) avec la face (2a) d'une feuille de non-tissé (2) et la face interne (3a) dudit film (3) avec l'autre face (2b) du non-tissé (2),
- on dépose par un procédé d'impression,les couches opaques (4); (5), réalisées en milieu aqueux, respectivement sur les faces (1b) et (3b) relatives aux films (1) et (3) en réalisant le cas échéant une «réserve » pour faire des zones exemptes de couche opaque, repérées entre elles et par rapport à l'élément de sécurité, afin de former ladite fenêtre (8), le cas échéant après avoir déposé de même et fait sécher les couches (6);(7) réalisées en milieu solvant.

25. Procédé de fabrication selon la revendication 23, **caractérisé en ce qu'**il comporte les étapes suivantes :
- on contrecolle la face interne (1a) du film de polyester (1) avec l'une des faces (2a) d'une feuille de non-tissé (2),
- on imprime au moins un élément de sécurité sur la face interne (3a) de l'autre film de polyester (3),
- on contrecolle la face imprimée (3a) dudit film (3) avec l'autre face (2b) du non-tissé (2) de l'assemblage du film (1) et du non-tissé (2),
- on dépose par un procédé d'impression les couches opaques (4);(5), réalisées en milieu aqueux, respectivement sur les faces externes (1b) et (3b) relatives aux films (1) et (3) en réalisant le cas échéant une «réserve » pour faire des zones exemptes de couche opaque, repérées entre elles et par rapport à l'élément de sécurité, afin de former la fenêtre (8), le cas échéant après avoir déposé de même et fait sécher les couches (6);(7) réalisées en milieu solvant.

26. Procédé de fabrication selon l'une des revendications 23 à 25, **caractérisé** eh ce que les couches (4);(5), le cas échéant les couches (6);(7), sont déposées par héliogravure.

27. Document de sécurité **caractérisé en ce qu'**il comporte comme support, le support complexe de sécurité selon l'une des revendications 1 à 22 ou obtenu selon l'une des revendications 23 à 26.

28. Billet de banque **caractérisé en ce qu'**il comporte un document de sécurité selon la revendication immédiatement précédente.

29. Utilisation d'un support selon l'une des revendications 1 à 22 ou obtenu selon les revendications 23 à 26 pour fabriquer un billet de banque.

## Claims

1. Printable complex security medium, **characterized in that** it comprises a polyester film (1), having an internal face (1a) and an external face (1b), and another polyester film (3), having an internal face (3a) and an external face (3b), between which films a nonwoven (2), having a face (2a) and a face (2b), is inserted, this nonwoven composed of fibres and/or filaments being mechanically strong, in particular being resistant to tearing, and being heat resistant.

2. Medium according to Claim 1, **characterized in that** the nonwoven (2) has a specific volume of between 1.5 and 2.5 cm³/g.

3. Medium according to either of Claims 1 and 2, **characterized in that** the nonwoven (2) is a thermally bonded product obtained by hot calendering of one or more webs formed from polyester fibres and/or filaments.

4. Medium according to one of the preceding claims, **characterized in that** the fibres have a mean diameter of between 5 and 20 µm and the filaments of between 10 and 50 µm.

5. Medium according to one of the preceding claims, **characterized in that** said nonwoven has a thickness between 40 and 70 µm.

6. Medium according to one of the preceding claims, **characterized in that** said nonwoven is impregnated with a compound giving it the ability to prevent liquids, such as water or solvents, from propagating therewithin.

7. Medium according to the immediately preceding claim, **characterized in that** said compound is a polymer, especially a styrene/acrylate copolymer.

8. Medium according to one of the preceding claims, **characterized in that** the films (1); (3) are translucent or transparent.

9. Medium according to one of the preceding claims, **characterized in that** the nonwoven (2) is translucent or transparent.

10. Medium according to one of the preceding claims, **characterized in that** the nonwoven (2) includes at least one security element.

11. Medium according to the immediately preceding claim, **characterized in that** said security element is chosen from: printing, security fibres such as metal fibres, magnetic fibres, fibres that change appearance according to the viewing angle or under the action of an excitation source, such as a radiation source, especially fibres that are fluorescent, thermochromic or photochromic.

12. Medium according to one of the preceding claims, **characterized in that** at least one of the polyester films (1); (3) includes at least one security element and preferably in its structure and/or on its respective internal face (1a); (3a).

13. Medium according to one of Claims 10 to 12, **characterized in that** said security element of the nonwoven (2) and/or of the film (1); (3) is a printing of grey vignettes.

14. Medium according to one of the preceding claims, **characterized in that** the external face (1b); (3b) of the films (1) and (3) has a printable opaque layer (4); (5), favouring the quality and the anchoring of the printing that it will receive.

15. Medium according to the immediately preceding claim, **characterized in that** it includes at least one window (8) formed by uncovered regions of opaque layers (4); (5), all these regions preferably being in registration so as to form a through-window.

16. Medium according to either of Claims 14 and 15, **characterized in that** the external face (1b); (3b) of the films (1) and (3) has, beneath the opaque layer (4); (5), an opaque ink layer (6); (7) favouring the anchoring of the layers (4); (5) to the films (1); (3) and revealing, where appropriate, said uncovered regions of opaque layers (4); (5) in registration in order to form said window (8).

17. Medium according to one of the preceding claims, **characterized in that** each of the polyester films (1) and (3) has a thickness of between 15 and 25 µm.

18. Medium according to one of Claims 14 to 17, **characterized in that** the layer (4); (5) and, where appropriate, the layer (6); (7) has a thickness of about 5 µm.

19. Medium according to one of Claims 15 to 18, **characterized in that** at least one security element of the polyester film (1); (3) and/or of the nonwoven can be observed in said window (8).

20. Medium according to one of Claims 14 to 19, **characterized in that** the layer (4); (5) and where appropriate the layer (6); (7) includes at least one security element.

21. Medium as claimed in one of the preceding claims, **characterized in that** it has a mean thickness of between 100 and 115 µm.

22. Medium as claimed in one of the preceding claims, **characterized in that** it includes an adhesive layer (9) between the film (1) and the nonwoven (2) and between the nonwoven (2) and the film (3), respectively.

23. Process for manufacturing a complex security medium as described by one of claims 14 to 22, **characterized in that**:
- the film (1), the nonwoven (2) and the film (3) are adhesively bonded together;
- the opaque layers (4); (5) are produced in aqueous medium and deposited on the external faces (1b) and (3b) relating to the films (1) and (3) respectively, where necessary producing a "reserve" so as to make regions containing no opaque layer in order to form said window (8) and, where necessary, after having likewise deposited and dried the layers (6); (7) produced in solvent medium.

24. Manufacturing process according to Claim 23, **characterized in that** it comprises the following steps:
- at least one security element is printed on at least one of the faces (2a); (2b) of the nonwoven (2);
- simultaneously, the internal face (1a) of the polyester film (1) is adhesively bonded to the face (2a) of a nonwoven sheet (2) and the internal face (3a) of said film (3) is adhesively bonded to the other face (2b) of the nonwoven (2);
- the opaque layers (4); (5) produced in aqueous medium are deposited by a printing process on the faces (1b) and (3b) relating to the films (1) and (3) respectively, if necessary producing a "reserve" so as to make regions containing no opaque layer, which are in registration with each other and with respect to the security element, so as to form said window (8), where appropriate after having likewise deposited and dried the layers (6); (7) produced in solvent medium.

25. Manufacturing process according to Claim 23, **characterized in that** it comprises the following steps:
- the internal face (1a) of the polyester film (1) is adhesively bonded to one of the faces (2a) of a sheet of nonwoven (2);
- at least one security element is printed on the internal face (3a) of the other polyester film (3);
- the printed face (3a) of said film (3) is adhesively bonded to the other face (2b) of the nonwoven (2) of the film (1) and the nonwoven (2) assembly;
- the opaque layers (4); (5) produced in aqueous medium are deposited by a printing process on the external faces (1b) and (3b) relating to the films (1) and (3) respectively, if necessary producing a "reserve" so as to make regions containing no opaque layer, which are in registration with each other and with respect to the security element, so as to form the window (8), where appropriate after having likewise deposited and dried the layers (6); (7) produced in solvent medium.

26. Manufacturing process according to one of Claims 23 to 25, **characterized in that** the layers (4); (5) and where appropriate the layers (6); (7) are deposited by photogravure.

27. Security document, **characterized in that** it comprises, as medium, the complex security medium according to one of Claims 1 to 22 or obtained according to one of Claims 23 to 26.

28. Banknote, **characterized in that** it includes a security document according to the immediately preceding claim.

29. Use of a medium according to one of Claims 1 to 22 or obtained according to Claims 23 to 26 for manufacturing a banknote.

## Patentansprüche

1. Komplexer bedruckbarer Sicherheitsträger **dadurch gekennzeichnet, dass** er einen Polyesterfilm (1) mit einer Innenseite (1a) und Außenseite (1b) und einen weiteren Polyesterfilm (3) mit einer Innenseite (3a) und einer Außenseite (3b) aufweist, zwischen denen ein Vliesstoff (2) mit einer Seite (2a) und einer Seite (2b) eingefügt ist, wobei dieser aus Fasern und/oder Filamenten bestehende Vliesstoff mechanisch widerstandsfähig, insbesondere reißfest und hitzebeständig ist.

2. Träger nach Anspruch 1, **dadurch gekennzeichnet, dass** der Vliesstoff (2) ein spezifisches Volumen von 1,5 bis 2,5 cm³ / g aufweist.

3. Träger nach einem der Ansprüche 1 bis 2, **dadurch gekennzeichnet, dass** der Vliesstoff (2) ein thermisch gebundenes Produkt ist, das durch Heißkalandrieren eines oder mehrerer aus Polyesterfasern und/oder - Polyesterfilamenten bestehenden Voiles hergestellt wird.

4. Träger nach einem der vorhergehenden Ansprüche, **dadurch gekennzeichnet, dass** die Fasern einen durchschnittlichen Durchmesser von 5 bis 20 µm und die Filamente einen durchschnittlichen Durchmesser von 10 bis 50 µm aufweisen.

5. Träger nach einem der vorhergehenden Ansprüche, **dadurch gekennzeichnet, dass** der Vliesstoff eine Dicke von 40 bis 70 µm aufweist.

6. Träger nach einem der vorhergehenden Ansprüche, **dadurch gekennzeichnet, dass** der Vliesstoff mit einer Verbindung imprägniert ist, die ihm die Fähigkeit verleiht zu verhindern, dass sich Flüssigkeiten wie Wasser oder Lösungsmittel in ihm ausbreiten.

7. Träger nach dem vorhergehenden Anspruch, **dadurch gekennzeichnet, dass** die Verbindung ein Polymer, insbesondere ein Styrol-Acrylat-Copolymer ist.

8. Träger nach einem der vorhergehenden Ansprüche, **dadurch gekennzeichnet, dass** die Filme (1);(3) halbdurchsichtig oder durchsichtig sind.

9. Träger nach einem der vorhergehenden Ansprüche, **dadurch gekennzeichnet, dass** der Vliesstoff (2) halbdurchsichtig oder durchsichtig ist.

10. Träger nach einem der vorhergehenden Ansprüche, **dadurch gekennzeichnet, dass** der Vliesstoff (2) mindestens ein Sicherheitselement aufweist.

11. Träger nach dem unmittelbar vorhergehenden Anspruch, **dadurch gekennzeichnet, dass** das Sicherheitselement unter den Aufdrucken, den Sicherheitsfasern wie Metallfasern, Magnetfasern, Fasern, die je nach Betrachtungswinkel oder bei Einwirkung einer Erregungsquelle wie Strahlung, insbesondere fluoreszente, thermochrome, fotochrome Fasern ihr Aussehen ändern, ausgewählt wird.

12. Träger nach einem der vorhergehenden Ansprüche, **dadurch gekennzeichnet, dass** mindestens einer der Polyesterfilme (1);(3) mindestens ein Sicherheitselement, vorzugsweise in seinem Gefüge und/oder auf seiner jeweiligen Innenseite (1a);(3a) aufweist.

13. Träger nach einem der Ansprüche 10 bis 12, **dadurch gekennzeichnet, dass** das Sicherheitselement des Vliesstoffes (2) und/oder des Films (1);(3) ein Graustufen-Aufdruck ist.

14. Träger nach einem der vorhergehenden Ansprüche, **dadurch gekennzeichnet, dass** die Außenseite (1b) ; (3b) der Filme (1) und (3) eine bedruckbare undurchsichtige Schicht (4); (5) aufweist, mit der das Anhaften des Aufdruckes begünstigt wird.

15. Träger nach dem vorhergehenden Anspruch, **dadurch gekennzeichnet, dass** er mindestens ein aus nicht abgedeckten Bereichen der undurchsichtigen Schicht bestehendes Fenster (8) aufweist, wobei diese Bereiche sich zur Bildung eines durchgehenden Fensters vorzugsweise miteinander decken.

16. Träger nach einem der Ansprüche 14 bis 15, **dadurch gekennzeichnet, dass** die Außenseite (1b); (3b) der Filme (1) und (3) unter der undurchsichtigen Schicht (4);(5) eine undurchsichtige Farbschicht (6);(7) aufweist, die das Anhaften der Schichten (4);(5) begünstigt und gegebenenfalls die nicht abgedeckten, sich zur Bildung des Fensters (8) deckenden Bereiche der undurchsichtigen Schicht sichtbar werden lässt.

17. Träger nach einem der vorhergehenden Ansprüche, **dadurch gekennzeichnet, dass** die Polyesterfilme (1) und (3) jeweils eine Dicke von 15 bis 25 µm aufweisen.

18. Träger nach einem der Ansprüche 14 bis 17, **dadurch gekennzeichnet, dass** die Schicht (4);(5) und gegebenenfalls die Schicht (6);(7) eine Dicke von circa 5 µm aufweist.

19. Träger nach einem der Ansprüche 15 bis 18, **dadurch gekennzeichnet, dass** mindestens ein Sicherheitselement des Polyesterfilms (1);(3) und/oder des Vliesstoffes (2) in dem Fenster (8) sichtbar ist.

20. Träger nach einem der Ansprüche 14 bis 19, **dadurch gekennzeichnet, dass** die Schicht (4);(5) und gegebenenfalls die Schicht (6);(7) mindestens ein Sicherheitselement aufweist.

21. Träger nach einem der vorhergehenden Ansprüche, **dadurch gekennzeichnet, dass** er eine durchschnittliche Dicke von 100 bis 115 µm aufweist.

22. Träger nach einem der vorhergehenden Ansprüche, **dadurch gekennzeichnet, dass** er jeweils zwischen dem Film (1) und dem Vliesstoff (2) und zwischen dem Vliesstoff (2) und dem Film (3) eine Klebstoffschicht (9) aufweist.

23. Verfahren zur Herstellung eines komplexen Sicherheitsträgers nach einem der Ansprüche 14 bis 22, **dadurch gekennzeichnet, dass**:
- der Film (1), der Vliesstoff (2) und der Film (3) durch Kaschieren gefügt werden,
- die undurchsichtigen Schichten (4);(5) in wässrigem Medium hergestellt und jeweils auf die den Filmen (1) und (3) entsprechenden Außenseiten (1b) und (3b) aufgebracht werden, wobei gegebenenfalls eine "Reserve" zur Bildung der von der undurchsichtigen Schicht nicht abgedeckten Bereiche und folglich des Fensters (8) geschaffen wird, und zwar gegebenenfalls nachdem auch die in Lösemedium hergestellten Schichten (6);(7) aufgetragen und getrocknet wurden.

24. Herstellungsverfahren nach Anspruch 23, **dadurch gekennzeichnet, dass** es sich aus folgenden Schritten zusammensetzt:
- mindestens ein Sicherheitselement wird auf mindestens eine der Seiten (2a);(2b) des Vliesstoffes aufgedruckt,
- gleichzeitig wird die Innenseite (1a) des Polyesterfilms (1) mit der Seite (2a) einer Vliesstofffolie (2) und die Innenseite (3a) des Films (3) mit der anderen Seite (2b) des Vliesstoffes (2) kaschiert,
- mittels Aufdruckverfahren werden die in wässrigem Medium hergestellten undurchsichtigen Schichten (4);(5) jeweils auf die den Filmen (1) und (3) entsprechenden Seiten (1b) und (3b) aufgetragen, wobei gegebenenfalls eine "Reserve" zur Bildung der von der undurchsichtigen Schicht nicht abgedeckten, untereinander und im Verhältnis zum Sicherheitselement markierten Bereiche und damit des Fensters (8) geschaffen wird, und zwar gegebenenfalls nachdem auch die in Lösemedium hergestellten Schichten (6);(7) aufgetragen und getrocknet wurden.

25. Herstellungsverfahren nach Anspruch 23, **dadurch gekennzeichnet, dass** es sich aus folgenden Schritten zusammensetzt:
- die Innenseite (1a) des Polyesterfilms (1) wird mit einer der Seiten (2a) einer Vliesstofffolie kaschiert,
- die Innenseite (3a) des anderen Polyesterfilms (3) wird mit mindestens einem Sicherheitselement bedruckt,
- die bedruckte Seite (3a) des Films (3) wird mit der anderen Seite (2b) des Vliesstoffes (2) des Filmverbundes (1) und des Vliesstoffes (2) kaschiert,
- die in wässrigem Medium hergestellten undurchsichtigen Schichten (4);(5) werden mittels Aufdruckverfahren jeweils auf die den Filmen (1) und (3) entsprechenden Außenseiten (1b) und (3b) aufgebracht, wobei gegebenenfalls eine "Reserve" zur Bildung der von der undurchsichtigen Schicht nicht abgedeckten, untereinander und im Verhältnis zum Sicherheitselement markierten Bereiche und damit des Fensters (8) geschaffen wird, und zwar gegebenenfalls nachdem auch die in Lösemedium hergestellten Schichten (6);(7) aufgetragen und getrocknet wurden.

26. Herstellungsverfahren nach einem der Ansprüche 23 bis 25, **dadurch gekennzeichnet, dass** die Schichten (4);(5) und gegebenenfalls die Schichten (6);(7) durch Heliogravüre aufgetragen werden.

27. Sicherheitsdokument, **dadurch gekennzeichnet, dass** es als Träger den komplexen Sicherheitsträger nach einem der Ansprüche 1 bis 22 bzw. der nach einem der Ansprüche 23 bis 26 hergestellt wurde, aufweist.

28. Banknote, **dadurch gekennzeichnet, dass** sie ein Sicherheitsdokument nach dem vorhergehenden Anspruch aufweist.

29. Verwendung eines Trägers nach einem der Ansprüche 1 bis 22 bzw. der nach den Ansprüchen 23 bis 26 hergestellt wurde, zur Herstellung einer Banknote.
